# EUROPEAN PATENT APPLICATION

(11) **EP 3 613 489 A1**
(43) Date of publication of application: **26.02.2020**
(21) Application number: 17906152.8
(22) Date of filing: 21.04.2017
(51) Int. Cl.: B01D 29/25, B01D 29/46, C02F 11/12

(54) **LAMINATED SPIRAL SOLID-LIQUID SEPARATOR WITH TORSIONAL PENDULUM MOTION**

(71) Applicant: Wu, Yunping, Fuzhou, Fujian 350000 (CN)
(72) Inventor: Wu, Yunping, Fuzhou, Fujian 350000 (CN)
(74) Representative: Viering, Jentschura & Partner mbB Patent- und Rechtsanwälte
(86) International application number: PCT/CN2017/081329
(87) International publication number: WO 2018/191926

(57) **Abstract**

Disclosed is a laminated spiral solid-liquid separator with a torsional pendulum motion, the separator comprising fixed rings (1), movable rings (2) and a screw shaft (3), wherein the screw shaft (3) is provided with the fixed rings (1) and the movable rings (2) in a staggered arrangement in a radial direction to form a cavity. The separator further comprises a support rod (4) sleeved in one end of the movable ring (2). The movable rings (2) connect all the movable rings (2) together to form a linkage by means of one or more kind of linkage mechanisms. The linkage is driven by one or more drive devices to swing about the support rod (4) which is served as the center. Support devices are arranged on two or more positions in the cavity. Both a fixing rod on the fixed rings (1) and the support rod (4) on the movable rings (2) pass through the support devices. A laminated spiral solid-liquid separator with a torsional pendulum motion having a simple structure, being difficult to wear down and having a good separation effect is provided.

## Description

### FIELD OF THE DISCLOSURE

The present invention relates to the technical field of solid-liquid separation equipment, and in particular, to a laminated spiral solid-liquid separator with a pendulum motion.

### BACKGROUND OF THE DISCLOSURE

Chinese invention patent No. 200780018706.9 discloses a laminated spiral solid-liquid separator, which includes: a solid-liquid separation part provided with multiple adjacent fixed rings and multiple movable rings disposed between the adjacent fixed rings; and at least one screw extending through the solid-liquid separation part. The movable rings are designed to be driven by the rotating screw, in such a manner that the filtrate from a processed object entering the solid-liquid separation part is drained out of the solid-liquid separation part while the processed object is moved towards an outlet of the solid-liquid separation part. For this laminated spiral solid-liquid separator, the contact between the movable rings and a screw shaft leads to abrasion therebetween.

Chinese invention patent No. 200810043376.5 discloses a novel spiral solid-liquid separator, where movable rings are eccentrically driven by an eccentric shaft to avoid abrasion between the movable rings and the screw shaft. However, for a drive manner using such a structure, deformation easily occurs since no extra support part is provided on the eccentric shaft. Even worse, a large machine cannot be driven due to high load bearing. In addition, a drive rod for driving the movable rings easily deforms and bends.

Chinese invention patent No. 200510054707.1 discloses an antiwear laminated spiral solid-liquid separator, where the movable ring is moved up and down under the action of external driving, but the active frequency of the movable ring and the rotational speed of the screw shaft in this way are fully synchronized, so the speed is slow. The movable ring and the fixed ring in this way are annular structures, and only one screw shaft is inserted therein, which is not applicable to some sludges that are easy to attach to the shaft. Due to the use of multiple eccentrics on a main drive rod, as well as the limit device, there is some wear and tear and maintenance. The external drive of the movable ring consists of a main drive rod and two auxiliary drive rods strung in the movable ring, resulting in that the structure is relatively complicated.

### SUMMARY OF THE DISCLOSURE

The technical problem to be solved by the present invention is to provide a laminated spiral solid-liquid separator with a pendulum motion which has a simple structure, is difficult to wear down, and has a good separation effect.

The present invention is implemented as follows.

A laminated spiral solid-liquid separator with a pendulum motion is provided, comprising: fixed rings, movable rings and screw shafts, wherein each of the screw shafts is provided with the fixed rings and the movable rings in a staggered arrangement in a radial direction to form a cavity; wherein, the separator further comprises a support rod sleeved in one end of the movable ring, and the movable rings are connected together to form a linkage by means of one or more kind of linkage mechanisms; wherein, the linkage is driven by one or more drive devices to swing about the support rod which is served as a center; and wherein, support devices are arranged on two or more positions in the cavity, and both a fixing rod on the fixed rings and the support rod on the movable rings pass through the support devices.

Further, the linkage mechanism fixes the movable rings and the support rod through a locking position of the key and the key slot; or a hole is formed in the movable ring through which a driven rod passes, the linkage mechanism fixes the movable rings and the support rod through the driven rod; wherein, the movable ring, which is fixed by a locking position of the key and the keyway and the support rod, is a twisting movable ring; wherein, the movable ring, which is fixed by the driven rod, is a swinging movable ring; wherein, the movable ring, of which one part is fixed by a locking position of the key and the keyway and the support rod and of which the other part is fixed by the driven rod, is an oscillating movable ring; wherein, the movable ring is one of the twisting movable ring, the swinging movable ring, and the oscillating movable ring, or a combination of the twisting movable ring, the swinging movable ring, or the oscillating movable ring; and wherein, the drive device performs a forward-and-reverse twisting motion by driving the support rod, or by driving the driven rod to swing about the support rod which is served as the center, or by a combination of the two to embody the movement of the linkage.

Further, the drive device is an independent drive motor.

Further, the drive device comprises a driven roller disk and an active roller disk; wherein, the driven roller disk comprises a carrier disk and two concentric equal-diameter rollers, the carrier disk is provided with a first central hole, and the two concentric equal-diameter rollers are disposed around the first central hole on the carrier disk which is served as the center, and the first central hole is provided to sleeve the support rod; wherein, the active roller disk comprises a circular plate and a plurality of concentric equal-diameter rollers, a middle portion of the circular plate is a second central hole, the plurality of concentric equal-diameter rollers are equidistantly disposed around the second central hole, and the second central hole is provided to sleeve the screw shaft or a driving shaft; and wherein, the drive device is disposed in a transmission case outside the cavity, or the driven roller disk in the drive device is integrally connected with the movable ring.

Further, the drive device comprises a driven roller disk and an eccentric device; wherein, the driven roller disk comprise a carrier disk and two concentric equal-diameter rollers, the carrier disk is provided with a first center hole, and the two concentric equal-diameter rollers are disposed around the first center hole on the carrier disk which is served as the center, and the first central hole is provided to sleeve the support rod; wherein, the eccentric device is composed of one or two eccentric wheels, and the center of one eccentric device is disposed on a symmetry axis of the two concentric equal-diameter rollers of the driven roller disk, the centerline of the two eccentric devices coincides with the symmetry axis of the two concentric equal-diameter rollers of the driven roller disk, and the center of the eccentric wheel is sleeved with the screw shaft or a driving shaft; and wherein, the drive device is disposed in a transmission case outside the cavity, or the driven roller disk in the drive device is integrally connected with the movable ring.

Further, the drive device comprises a driven disk with a rectangular frame and an eccentric device; wherein, the driven disk with a rectangular frame is provided with a first central hole and a rectangular frame, the first central hole is provided to sleeve the support rod, and the center of the first central hole is located at a symmetry axis of the rectangular frame; wherein, the eccentric device is disposed in the rectangular frame, the center of the eccentric device is on the symmetry axis of the rectangular frame, and the eccentric device sleeves the screw shaft or a driving shaft; and wherein, the drive device is disposed in a transmission case outside the cavity, or the rectangular frame in the drive device is integrally connected with the movable ring.

Further, the drive device comprises a first single-stage gear, a second single-stage gear, a first intermediate gear, a second intermediate gear, a full-tooth gear, and a transmission rod; wherein, two ends of the transmission rod are fixed to an inner wall of a transmission case outside the cavity; wherein, the first single-stage gear and the second single-stage gear are sequentially sleeved on a first driven rod; wherein, the first intermediate gear and the full-tooth gear are sequentially sleeved on the screw shaft, and the second intermediate gear is sleeved on the transmission rod; wherein, the first single-stage gear and the first intermediate gear correspond to each other and mesh with each other, the second single-stage gear, the full-tooth gear, and the second intermediate gear correspond to each other and mesh with each other; wherein, the intermittent segment of the intermediate gear accommodates the single-stage gear; and wherein, the drive device is disposed in the transmission case outside the cavity.

Further, the number of the screw shafts is one or more, parts of blades of the adjacent two screw shafts overlap each other, and a plurality of screw shafts are driven to rotate in the same direction or opposite directions by a gear set.

The invention has the following advantages. 1. The invention realizes the change of the relative position and the overlapping area between the movable ring and the fixed ring without contacting the movable ring with the screw shaft in a relatively simple and effective driving manner, thereby helping to further reduce wear and failure rates. 2. The support rod of the present invention is located outside the cavity of the laminated spiral solid-liquid separator, and supports the support rod by two or more support devices, and the movable ring swings about the support rod to solve the problem of wearing down caused by the contact between the movable ring and the screw shaft and makes it is possible to the design of a plurality of shafts; in addition, it also solves the problem that the support rod is easily deformed by force. 3. The present invention replaces a screw shaft with two or more screw shafts. Since parts of the blades of the adjacent screw shafts are in a state of overlapping with each other, when the screw shaft is rotating, the material which is rotated to close to the shaft center and easier to form as block is continuously pushed forward, and the material is fully and evenly rolled around the periphery of the cavity, which is beneficial to the discharge of moisture. Besides, the screw shaft is arranged side by side, the fixed ring and the movable rings are closely attached to the outer circumference of the screw shaft, so that the whole cavity is flat, and the drainage area of the bottom is increased, which is favorable for the discharge of water, especially when the screw shaft is reversely operated. For the material that can withstand the extrusion, since the screw blades are close to each other during operation, the water content can be further reduced. 4. Since the volume of the cavity is correspondingly increased, the gear is driven between the shaft and the shaft, thereby realizing a relatively energy-saving method and increasing the throughput of the single-base body.

### BRIEF DESCRIPTION OF THE DRAWINGS

The present invention will be further described below in conjunction with the embodiments with reference to the accompanying drawings.
FIG. 1 is a front view showing the overall structure of a device according to a first embodiment of the present invention.
FIG. 2 is a schematic view showing the structure of a fixed ring according to a first embodiment of the present invention.
FIG.3 is a schematic view showing the structure of a twisting movable ring according to a first embodiment of the present invention.
FIG. 4 is a schematic view showing the structure of a swinging movable ring according to a first embodiment of the present invention.
FIG. 5 is a schematic view showing the structure of an oscillating movable ring according to a first embodiment of the present invention.
FIG. 6 is a schematic structural view showing a support plate according to a first embodiment of the present invention.
FIG. 7 is a structural schematic view showing a driven roller disk according to a first embodiment of the present invention.
FIG. 8 is a schematic view showing the structure of an active roller disk according to a first embodiment of the present invention.
FIG. 9 is a schematic view showing the motion sequence of the drive device of the first embodiment of the present invention.
FIG. 10 is a schematic view showing a gear mechanism of a second embodiment of the present invention
FIG. 11 is a schematic view showing the structure of a single-stage gear of a gear mechanism according to a second embodiment of the present invention.
FIG. 12 is a schematic view showing the structure of an intermediate gear of a gear mechanism according to a second embodiment of the present invention.

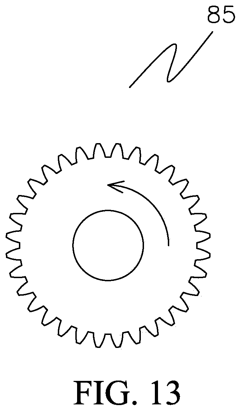

FIG. 13 is a schematic view showing the structure of a full-tooth gear of a gear mechanism according to a second embodiment of the present invention.
FIG. 14 is a front view showing the overall structure of a device according to a third embodiment of the present invention.
FIG. 15 is a plan view showing the overall structure of a device according to a third embodiment of the present invention.
FIG. 16 is a schematic view showing the structure of a fixed ring of a third embodiment of the present invention.
FIG. 17 is a schematic view showing the structure of a twisting movable ring according to a third embodiment of the present invention.
FIG. 18 is a schematic view showing the structure of a swinging movable ring according to a third embodiment of the present invention.
FIG. 19 is a schematic view showing the structure of an oscillating movable ring according to a third embodiment of the present invention.
FIG. 20 is a schematic view showing the structure of a support plate according to a third embodiment of the present invention.
FIG. 21 is a schematic view showing the movement track of the drive device and the movable ring according to a fourth embodiment of the present invention.
FIG. 22 is a schematic view showing the movement track of the drive device and the movable ring according to a fifth embodiment of the present invention.

### DETAILED DESCRIPTION OF THE EXEMPLARY EMBODIMENTS

### First embodiment:

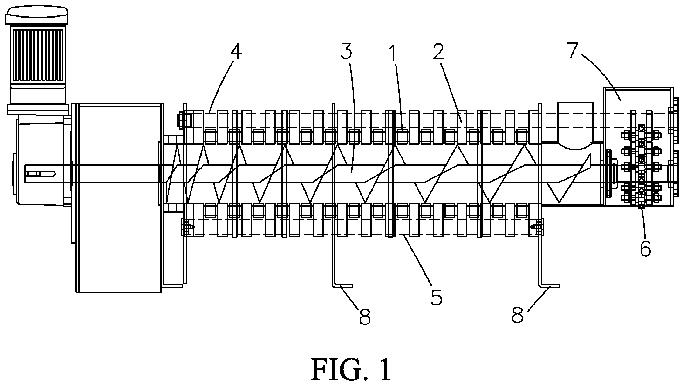

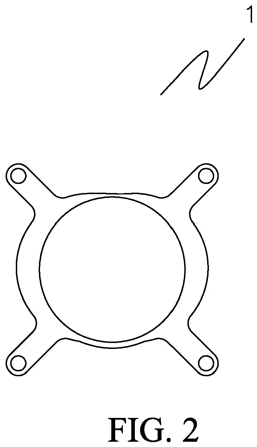

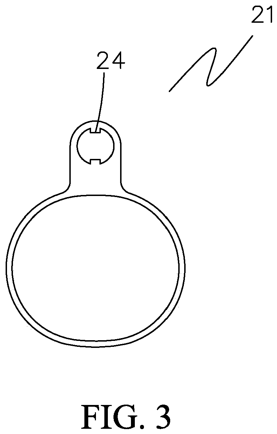

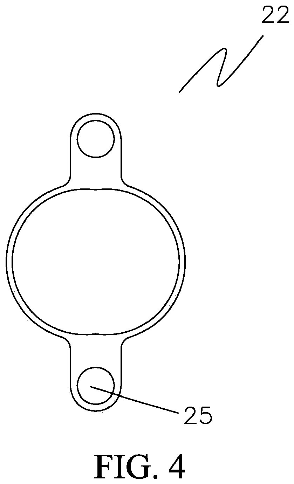

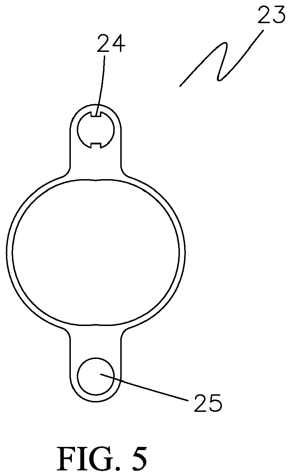

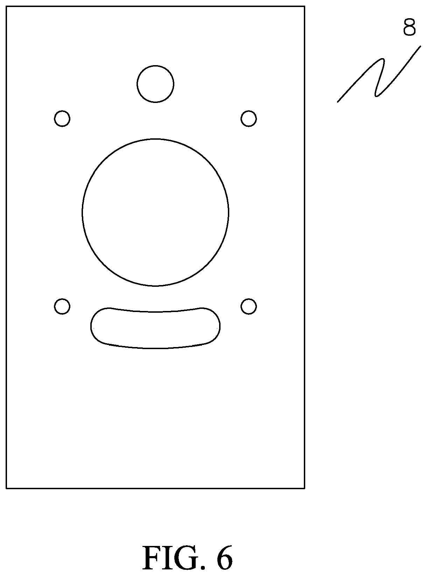

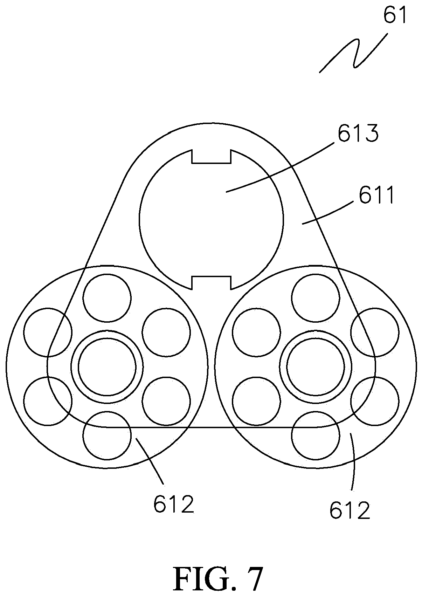

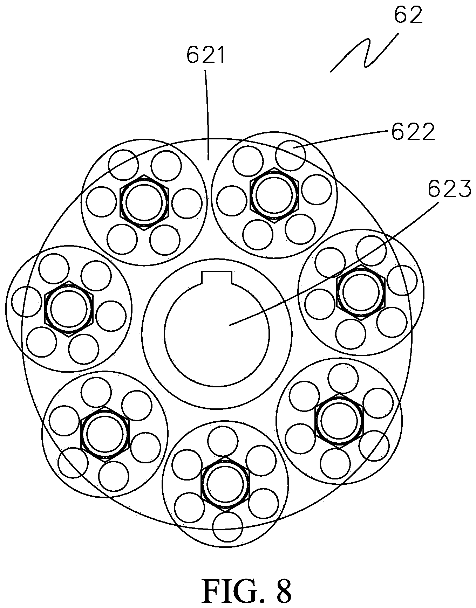

As shown in FIG. 1 to FIG. 9, a laminated spiral solid-liquid separator with a pendulum motion includes fixed rings 1, movable rings 2, and screw shafts 3. Each of the screw shafts 3 is provided with the fixed rings 1 and the movable rings 2 in a staggered arrangement in a radial direction to form a cavity.

A support rod 4 is sleeved in one end of the movable ring 2, and the movable rings 2 connect all the movable rings 2 together to form a linkage by means of one or more kind of linkage mechanisms.

The linkage mechanism fixes the movable rings 2 and the support rod 4 through a locking position of a key and a keyway 24; or a hole 25 is formed in the movable ring 2 through which a driven rod 5 passes, and the linkage mechanism fixes the movable rings 2 and the support rod 4 through the driven rod 5.

The movable ring 2, which is fixed by a locking position of the key and the keyway 24 and the support rod 4, is a twisting movable ring 21.

The movable ring 2, which is fixed by the driven rod 5, is called a swinging movable ring 22.

The movable ring 2, of which one part is fixed by a locking position of the key and the keyway 24 and the support rod 4 and of which the other part is fixed by the driven rod 5, is called an oscillating movable ring 23.

In this embodiment, all of the movable rings 2 may be the twisting movable ring 21, or may be the oscillating movable ring 23, or a combination of the oscillating movable ring 23 and the swinging movable ring 22, or a combination of the oscillating movable ring 23 and the twisting movable ring 21, or a combination of the twisting movable ring 21, the swinging movable ring 22, and the oscillating movable ring 23.

When the swinging movable ring 22 or the oscillating movable ring 23 is present in the movable ring 2, the driven rod 5 passes through the lower end of the swinging movable ring 22 or the oscillating movable ring 23.

There are two support plates 8 disposed in the cavity. A fixing rod on the fixed ring 1, the support rod 4 and the driven rod 5 on the movable ring 2 all pass through the support plat 8. A ball bearing (not shown) is disposed in a circular hole of the support plate 8, wherein the circular hole is provided for making the support rod 4 pass through.

The screw shaft 3 drives the support rod 4 through a drive device 6 to perform a repeated forward-and-reverse twisting motion, thereby driving the driven rod 5 located at the lower end of the movable ring 2 to swing about the support rod 4 as the center.

The drive device 6 is arranged in a transmission case 7 outside the cavity.

The drive device 6 includes a driven roller disk 61 and an active roller disk 62. The driven roller disk 61 includes a carrier disk 611 and two concentric equal-diameter rollers 612. The center of the carrier disk 61 is a first central hole 613. The carrier disk 61 is provided with two concentric equal-diameter rollers 612. The first central hole 613 is provided to sleeve the support rod 4.

The active roller disk 62 includes a circular plate 621 and a plurality of concentric equal-diameter rollers 622. The middle portion of the circular plate 621 is a second central hole 623, and the plurality of concentric equal-diameter rollers 622 are disposed equidistantly around the second central hole 623. The second center hole 623 is provided to sleeve the screw shaft 3.

A drive motor drives the screw shaft 3 to rotate, and the screw shaft 3 drives the active roller disk 62 to rotate. Then, the concentric equal-diameter rollers 622 on the active roller disk 62 lift and drop the concentric equal-diameter rollers 612 of the driven roller disk 61 on the upper thereof, thereby driving the support rod 4 to have a regular forward-and-reverse twisting motion and causing the driven rod 5 to be driven to swing about the support rod 4 which is served as the center.

The angle at which the support rod 4 is twisted is related to the distance from the center of the driven roller disk 61 to the center of the concentric equal-diameter rollers 612 thereof, the radius of the concentric equal-diameter rollers 612 thereof, the position of the concentric equal-diameter rollers 612 thereof, the distance from the center of the active roller disk 62 to the center of the concentric equal-diameter rollers 622 thereof, the radius of the concentric equal-diameter rollers 622 thereof, the distance between the adjacent concentric equal-diameter rollers 622 thereof, and the distance from the center of the driven roller disk 61 to the center of the active roller disk 62. When the concentric equal-diameter rollers 622 of the active roller disk 62 are tangential to the left concentric equal-diameter roller 612 of the driven roller disk 61, the tangent point should be on the right side of the centerline of a sector disk 611 and the concentric equal-diameter roller 612 thereof, and the concentric equal-diameter roller 622 is ensured to leave from the right concentric equal-diameter roller 612 of the driven roller disk 61. When the left concentric equal-diameter roller 612 of the driven roller disk 61 is pushed to the highest position by the concentric equal-diameter rollers 622 of the active roller disk 62, the support rod 4 is twisted to the maximum clockwise angle, at which time the concentric equal-diameter rollers 622 are not yet tangent with the right concentric equal-diameter roller 612 of the driven roller disk 61. When the right concentric equal-diameter roller 612 of the driven roller disk 61 is pushed up to the highest position by the concentric equal-diameter rollers 622 of the active roller disk 62, the support rod 4 is twisted to the maximum angle counterclockwise.

The distance of the centerline of the two concentric equal-diameter rollers 612 of the driven roller disk 61 is equal to that of the two concentric equal-diameter rollers 622 adjacent to the active roller disk 62. When the two centerlines are close together and in parallel, the upper and lower rollers are tangent.

When the support rod 4 drives the movable ring 2 to swing toward the axis of the screw shaft 3, it ensures that the blade of the screw shaft 3 can be accessed to the utmost extent without contacting the blade of the screw shaft 3, and when separating the axis, the movable ring 2 and the fixed ring 1 are ensured to have a sufficient area to overlap to prevent leakage of mud.

### Second embodiment:

This embodiment employs a gear mechanism 8 in place of the drive device 6 of the first embodiment, and the remaining structure is the same as that of the first embodiment.

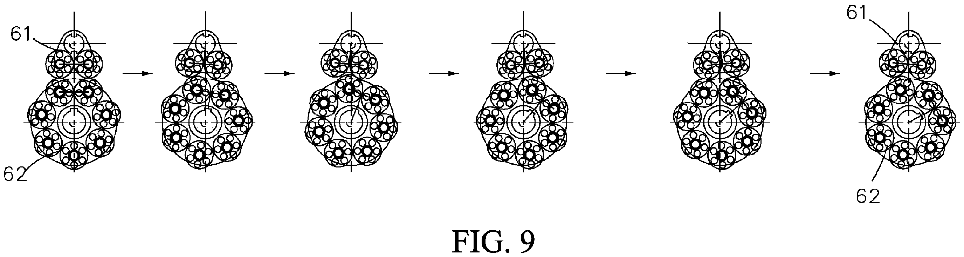

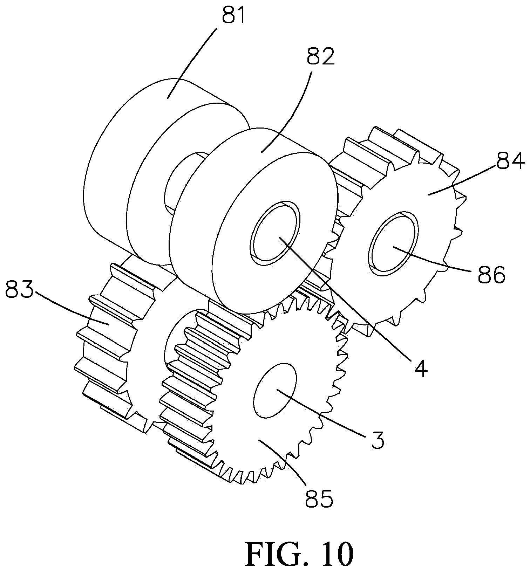

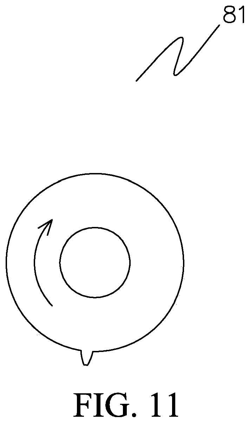

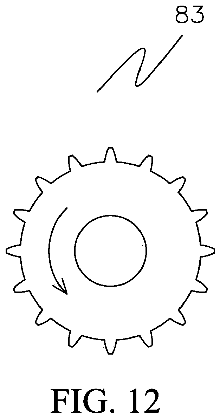

As shown in FIG. 9 to FIG. 12, the gear mechanism 8 includes a first single-stage gear 81, a second single-stage gear 82, a first intermediate gear 83, a second intermediate gear 84, a full-tooth gear 85, and a transmission rod 86.

Both ends of the transmission rod 86 are fixed to the wall of the transmission case 7.

The first single-stage gear 81 and the second single-stage gear 82 are sequentially sleeved on the first driven rod 4.

The first intermediate gear 83 and the full-tooth gear 85 are sequentially sleeved on the screw shaft 3, and the second intermediate gear 84 is sleeved on the transmission rod 86.

The first single-stage gear 81 and the first intermediate gear 83 correspond to each other, and the two gears mesh with each other. The second single-stage gear 82, the full-tooth gear 85, and the second intermediate gear 84 correspond to each other, and the three gears mesh with each other.

The screw shaft 3 drives the support rod 4 through the gear mechanism 8 to perform a forward-and-reverse twisting motion, thereby driving the driven rod 5 located at the lower end of the movable ring 2 to perform a pendulum motion.

When the screw shaft 3 is rotated (clockwise) under the driving of the drive motor, the first intermediate gear 83 drives the corresponding second single-stage gear 82 on the support rod 4 to rotate counterclockwise while the full-tooth gear 85 on the screw shaft 3 drives the corresponding second intermediate gear 84 on the transmission rod 86 to rotate counterclockwise, and the second intermediate gear 84 further drives the corresponding first single-stage gear 81 on the transmission rod 86 to rotate clockwise, so that the repeated forward-and-reverse twisting motion of the support rod 4 is realized, and the driven rod 5 is driven to realize the pendulum movement.

In the embodiment, the first single-stage gear 81 and the second single-stage gear 82 are a single-tooth gear, and the first intermediate gear 83 and the second intermediate gear 84 are an intermediate-tooth gear. In practice, the angles needed to the twisting motion can be combined, and the single-stage gear can be replaced by a single-stage multi-tooth gear. Accordingly, the intermediate gear can be an intermediate full-tooth gear, that is, the intermittent segment of the intermediate multi-tooth gear accommodates the single-stage multi-tooth gear.

### Third embodiment:

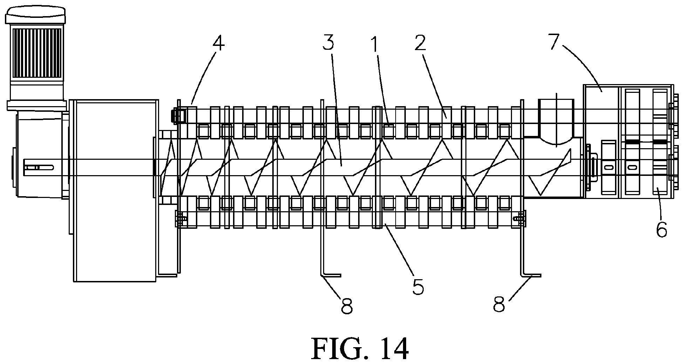

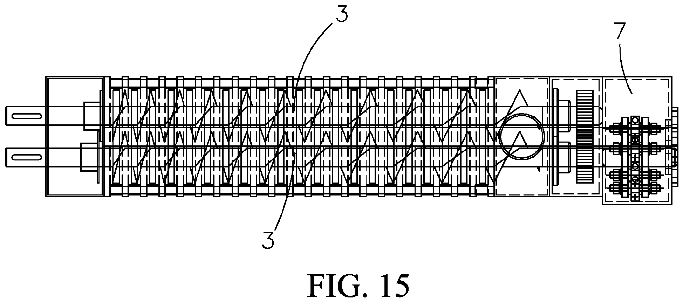

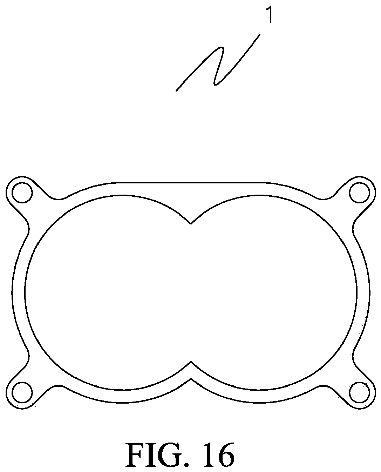

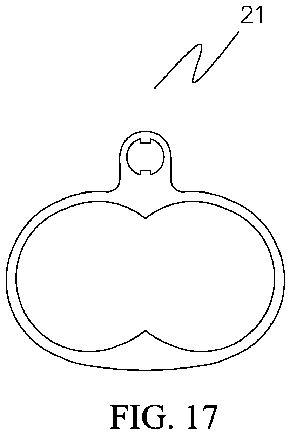

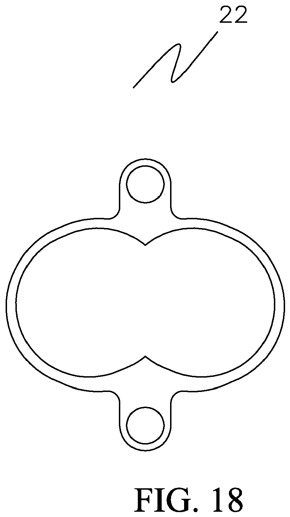

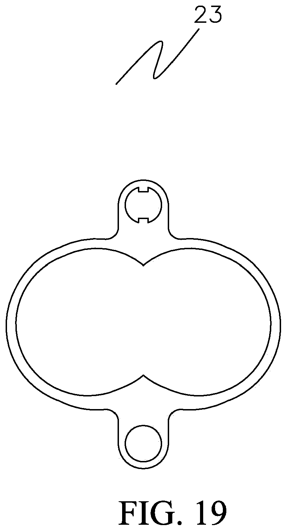

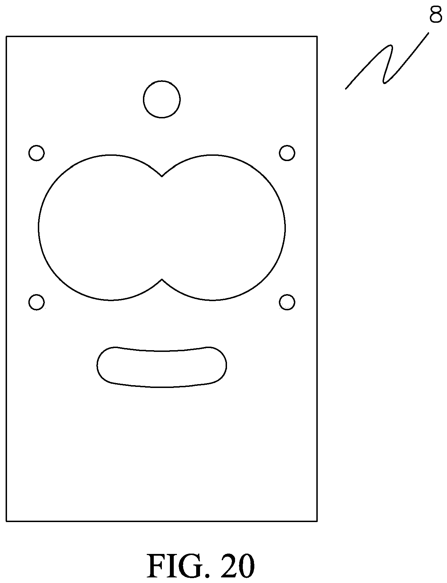

As shown in FIGS. 14 to 20, there are two screw shafts 3 provided in this embodiment, and correspondingly, the shape of the fixed ring 1, the twisting movable ring 21, the swinging movable ring 22, and the oscillating movable ring 23 is a double-ring staggered ring structure. The rest of the structure is the same as that of the first embodiment or the second embodiment.

### Fourth embodiment:

The difference between the embodiment and the others is that the drive device 9 includes a driven disk 91 with a rectangular frame and an eccentric device 92. The driven disk 91 is provided with a rectangular frame 911 and a first central hole provided to sleeve the support rod 4. The eccentric device 92 is disposed in the rectangular frame 911, and the eccentric device 92 is sleeved with the screw shaft 3 or a driving shaft.

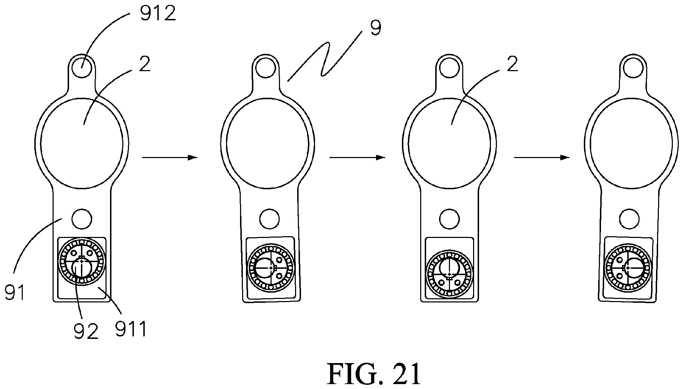

The drive device 9 is disposed in the transmission case 7 outside the cavity, or the rectangular frame 91 in the drive device 9 is integrally connected with the movable ring 2, and the movement track is as shown in FIG. 21.

### Fifth embodiment:

The difference between the embodiment and the others is that the drive device 10 includes a carrier disk 101 and an eccentric device 102. The carrier disk 101 is provided with two concentric equal-diameter rollers 1011, 1012, and a first central hole 1013 provided to sleeve the support rod 4. The eccentric device 102 is composed of one or two eccentric wheels and is disposed between the two concentric equal-diameter rollers 1011, 1012 of the carrier disk 101. When one eccentric device 102 is provided, its center is disposed on the symmetry axis of the two concentric equal-diameter rollers 1011, 1012 of the driven roller disk 61. When two eccentric devices 102 are provided, the centerline of the eccentric device 102 coincides with the symmetry axis of the two concentric equal-diameter rollers 1011, 1012 of the driven roller disk 61, and the center of the eccentric device 102 is sleeved with the screw shaft 3 or a driving shaft.

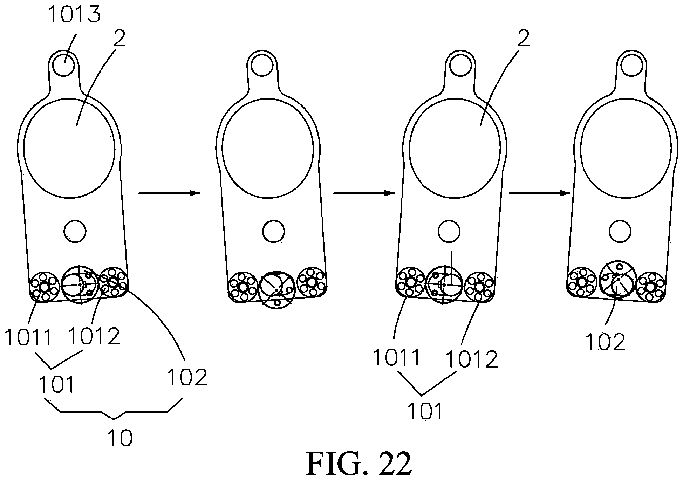

The drive device 10 is disposed in a transmission case 7 outside the cavity, or the carrier disk 101 in the drive device is integrally connected with the movable ring 2, and the movement track is as shown in FIG. 22.

In addition, in practice, the forward-and-reverse twisting motion of the support rod 4 can also be achieved by an independent drive motor.

In the present invention, the drive device is not limited to one type, and may be two kinds of drive devices to achieve the effects of the present invention. The drive device is not limited to being driven by the screw shaft 3, and may be driven by other external driving shafts.

The above merely describes preferred embodiments of the present application, but is not intended to limit the protection scope of the present invention. Any modifications, equivalent replacements or improvements made within the spirit and principle of the present application shall fall within the protection scope of the present invention.

## Claims

1. A laminated spiral solid-liquid separator with a pendulum motion, comprising: fixed rings, movable rings and screw shafts, wherein each of the screw shafts is provided with the fixed rings and the movable rings in a staggered arrangement in a radial direction to form a cavity;
wherein, the separator further comprises a support rod sleeved in one end of the movable ring, and the movable rings are connected together to form a linkage by means of one or more kind of linkage mechanisms;
wherein, the linkage is driven by one or more drive devices to swing about the support rod which is served as a center; and
wherein, support devices are arranged on two or more positions in the cavity, and both a fixing rod on the fixed rings and the support rod on the movable rings pass through the support devices.

2. The laminated spiral solid-liquid separator with a pendulum motion according to claim 1, wherein the linkage mechanism fixes the movable rings and the support rod through a locking position of the key and the key slot; or a hole is formed in the movable ring through which a driven rod passes, and the linkage mechanism fixes the movable rings and the support rod through the driven rod;
wherein, the movable ring, which is fixed by a locking position of the key and the keyway and the support rod, is a twisting movable ring;
wherein, the movable ring, which is fixed by the driven rod, is a swinging movable ring;
wherein, the movable ring, of which one part is fixed by a locking position of the key and the keyway and the support rod and of which the other part is fixed by the driven rod, is an oscillating movable ring;
wherein, the movable ring is one of the twisting movable ring, the swinging movable ring, and the oscillating movable ring, or a combination of the twisting movable ring, the swinging movable ring, or the oscillating movable ring; and
wherein, the drive device performs a forward-and-reverse twisting motion by driving the support rod, or by driving the driven rod to swing about the support rod which is served as the center, or by a combination of the two to embody the movement of the linkage.

3. The laminated spiral solid-liquid separator with a pendulum motion according to claim 1 or claim 2, wherein the drive device is an independent drive motor.

4. The laminated spiral solid-liquid separator with a pendulum motion according to claim 1 or claim 2, wherein the drive device comprises a driven roller disk and an active roller disk;
wherein, the driven roller disk comprises a carrier disk and two concentric equal-diameter rollers, the carrier disk is provided with a first central hole, and the two concentric equal-diameter rollers are disposed around the first central hole on the carrier disk which is served as the center, and the first central hole is provided to sleeve the support rod;
wherein, the active roller disk comprises a circular plate and a plurality of concentric equal-diameter rollers, a middle portion of the circular plate is a second central hole, the plurality of concentric equal-diameter rollers are equidistantly disposed around the second central hole, and the second central hole is provided to sleeve the screw shaft or a driving shaft; and
wherein, the drive device is disposed in a transmission case outside the cavity, or the driven roller disk in the drive device is integrally connected with the movable ring.

5. The laminated spiral solid-liquid separator with a pendulum motion according to claim 1 or claim 2, wherein the drive device comprises a driven roller disk and an eccentric device;
wherein, the driven roller disk comprise a carrier disk and two concentric equal-diameter rollers, the carrier disk is provided with a first center hole, and the two concentric equal-diameter rollers are disposed around the first center hole on the carrier disk which is served as the center, and the first central hole is provided to sleeve the support rod;
wherein, the eccentric device is composed of one or two eccentric wheels, and the center of one eccentric device is disposed on a symmetry axis of the two concentric equal-diameter rollers of the driven roller disk, the centerline of the two eccentric devices coincides with the symmetry axis of the two concentric equal-diameter rollers of the driven roller disk, and the center of the eccentric wheel is sleeved with the screw shaft or a driving shaft; and
wherein, the drive device is disposed in a transmission case outside the cavity, or the driven roller disk in the drive device is integrally connected with the movable ring.

6. The laminated spiral solid-liquid separator with a pendulum motion according to claim 1 or claim 2, wherein the drive device comprises a driven disk with a rectangular frame and an eccentric device;
wherein, the driven disk with a rectangular frame is provided with a first central hole and a rectangular frame, the first central hole is provided to sleeve the support rod, and the center of the first central hole is located at a symmetry axis of the rectangular frame;
wherein, the eccentric device is disposed in the rectangular frame, the center of the eccentric device is on the symmetry axis of the rectangular frame, and the eccentric device sleeves the screw shaft or a driving shaft; and
wherein, the drive device is disposed in a transmission case outside the cavity, or the rectangular frame in the drive device is integrally connected with the movable ring.

7. The laminated spiral solid-liquid separator with a pendulum motion according to claim 1 or claim 2, wherein the drive device comprises a first single-stage gear, a second single-stage gear, a first intermediate gear, a second intermediate gear, a full-tooth gear, and a transmission rod;
wherein, two ends of the transmission rod are fixed to an inner wall of a transmission case outside the cavity;
wherein, the first single-stage gear and the second single-stage gear are sequentially sleeved on a first driven rod;
wherein, the first intermediate gear and the full-tooth gear are sequentially sleeved on the screw shaft, and the second intermediate gear is sleeved on the transmission rod;
wherein, the first single-stage gear and the first intermediate gear correspond to each other and mesh with each other, the second single-stage gear, the full-tooth gear, and the second intermediate gear correspond to each other and mesh with each other;
wherein, the intermittent segment of the intermediate gear accommodates the single-stage gear; and
wherein, the drive device is disposed in the transmission case outside the cavity.

8. The laminated spiral solid-liquid separator with a pendulum motion according to claim 1 or claim 2, wherein the number of the screw shafts is one or more, parts of blades of the adjacent two screw shafts overlap each other, and a plurality of screw shafts are driven to rotate in the same direction or opposite directions by a gear set.
